# EUROPÄISCHE PATENTSCHRIFT

(11) **EP 3 233 607 B1**
(45) Veröffentlichungstag und Bekanntmachung des Hinweises auf die Patenterteilung: **15.05.2019**
(21) Anmeldenummer: 15808554.8
(22) Anmeldetag: 01.12.2015
(51) Int. Cl.: B62D 1/10, B62D 5/00

(54) **ARRETIERVORRICHTUNG**
ARRESTING DEVICE
DISPOSITIF DE BLOCAGE

(30) Priorität: 18.12.2014 DE 102014226415; 28.08.2015 DE 102015216518
(43) Veröffentlichungstag der Anmeldung: 25.10.2017
(73) Patentinhaber: Joyson Safety Systems Germany GmbH, 63743 Aschaffenburg (DE)
(72) Erfinder: MARKFORT, Dieter, 13088 Berlin (DE)
(74) Vertreter: Maikowski & Ninnemann Patentanwälte Partnerschaft mbB
(86) Internationale Anmeldenummer: PCT/EP2015/078208
(87) Internationale Veröffentlichungsnummer: WO 2016/096406

(56) Entgegenhaltungen:
- EP-A1- 2 233 383
- DE-A1-102004 037 617
- DE-A1-102010 042 329

## Beschreibung

Die vorliegende Erfindung betrifft eine Arretiervorrichtung zur Arretierung einer bewegbaren Komponente, insbesondere eines Überlagerungsantriebs einer Überlagerungslenkung, nach dem Oberbegriff des Anspruchs 1 sowie einen Überlagerungsantrieb für eine Überlagerungslenkung eines Kraftfahrzeugs.

Eine solche Arretiervorrichtung umfasst ein erstes und ein zweites Arretierelement. Das zweite Arretierelement ist relativ zum ersten Arretierelement zwischen einer Arretierposition und einer Freigabeposition hin und her bewegbar. Dabei ist das zweite Arretierelement ausgebildet und eingerichtet, in der Arretierposition derart mit dem ersten Arretierelement zusammenzuwirken, dass die bewegbare Komponente gegen eine Bewegung arretiert wird. In der Freigabeposition des zweiten Arretierelements ist diese Bewegung der bewegbaren Komponente freigegeben. Bei der bewegbaren Komponente kann es sich um ein einzelnes Bauteil oder um mehrere Bauteile, z.B. eine Baugruppe handeln. Die Arretiervorrichtung umfasst ferner eine Dämpfungseinrichtung, die eine Bewegung des zweiten Arretierelements in die Arretierposition dämpft.

Durch die Arretiervorrichtung kann eine Lagefixierung der bewegbaren Komponente erreicht werden. Die Arretiervorrichtung dient beispielsweise dazu, einen Überlagerungsantrieb einer Überlagerungslenkung eines Fahrzeugs durch mechanische Einwirkung zu arretieren; z.B. um bei einer Fehlfunktion des Überlagerungsantriebs ein Einleiten eines Lenkwinkels in eine Lenkwelle des Fahrzeugs durch den Überlagerungsantrieb zu verhindern oder um bei einem Ausfall des Überlagerungsantriebes ein Einleiten eines Lenkwinkels durch den Fahrer des Fahrzeugs zu gewährleisten.

Beim Betrieb einer Arretiervorrichtung kann es zu unerwünschten Geräuschentwicklungen kommen, insbesondere, wenn das zweite Arretierelement der Arretiervorrichtung in die Arretierposition bewegt wird. Das betrifft sowohl das zwischen der Freigabeposition und der Arretierposition hin und her bewegte zweite Arretierelement als auch weitere, das zweite Arretierelement antreibende Elemente. Besonders kritisch ist dieser Umstand regelmäßig, wenn die Arretiervorrichtung im unmittelbaren Hörbereich einer Person eingesetzt werden soll, wie es beispielsweise bei einer im Lenkrad angeordneten Überlagerungslenkung der Fall ist.

Aus der DE 10 2010 037 384 A1 ist eine Arretiervorrichtung in Form einer Verriegelungsvorrichtung für eine Überlagerungslenkung mit einer elektrischen Spule bekannt. Letztere treibt einen als zweites Arretierelement dienenden Sperrstift an, indem durch eine Bestromung der Spule ein Anker in Form eines mit dem Sperrstift fest verbundenen zylindrischen Bolzens linear zwischen zwei Endlagen in einem Führungszylinder hin und her bewegt wird. Zur Vermeidung einer Geräuschentwicklung beim Aufschlagen des zylindrischen Bolzens ist eine Dämpfungseinrichtung vorgesehen, mit in den Endlagen des zylindrischen Bolzens am Führungszylinder angeordneten Dämpfungselementen in Form von O-Ringen. Nachteilig an einer derartigen Anordnung ist, dass lediglich die Geräuschentwicklung durch ein Aufschlagen von Teilen innerhalb der Verriegelungsvorrichtung gemindert wird. Tritt der Sperrstift in Bewegungsrichtung selbst in direkten Kontakt mit als erstes Arretierelement dienenden, insbesondere drehbaren Teilen der Überlagerungslenkung, vermag diese Anordnung jedoch keine dadurch entstehenden Geräusche zu mindern.

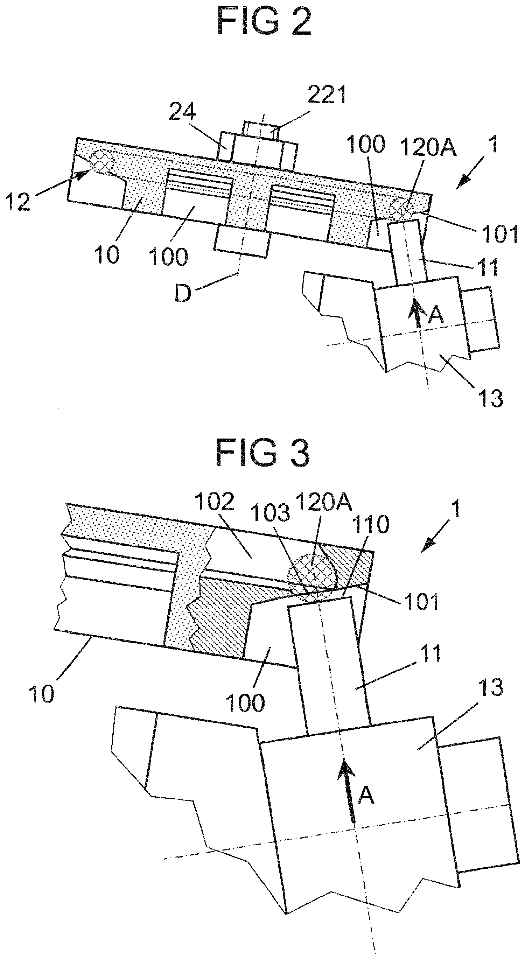

Weiterhin ist aus der DE 10 2012 219 549 A1 eine Arretiervorrichtung zum Arretieren einer bewegbaren Komponente (entsprechend einem ersten Arretierelement) bekannt, bei der ein relativ zur bewegbaren Komponente verschiebliches Arretierelement (entsprechend einem zweiten Arretierelement) der Arretiervorrichtung in einem Kontaktbereich zur bewegbaren Komponente eine Dämpfungseinrichtung aufweist. Bestandteil der Dämpfungseinrichtung ist ein auf einem Dämpfungselement elastisch gelagertes Kontaktelement. Nachteil einer derartigen Anordnung ist, dass eine Minderung der Geräuschentwicklung über die Lebensdauer der Arretiervorrichtung durch eine einzige Kombination von Kontaktelement und Dämpfungselement gewährleistet werden muss. Eine dazu notwendige Verschleißfestigkeit bedingt eine entsprechende Härte des Kontaktelementes, was sich aber negativ auf die Geräuschentwicklung auswirken kann. Eine integrierte Lösung entsprechend der dortigen Fig. 3C, bei der das Kontaktelement und das Dämpfungselement einstückig ausgebildet sind, stellt einen Kompromiss zwischen Geräuschentwicklung und Verschleißfestigkeit dar. Nachteilig sind dabei kurze Intervalle zum Austausch verschlissener Teile.

Darüber hinaus ist eine gattungsgemäße
Arretiervorrichtung für eine bewegbare Komponente einer Lenkvorrichtung aus der DE 10 2004 037 617 A1 bekannt.

Der Anmelderin ist ferner aus der Praxis bekannt, einen Schallimpuls, den das zweite Arretierelement beim Auftreffen auf das erste Arretierelement erzeugt, durch Maßnahmen wie ein softwaregesteuertes "langsames Absetzen" des zweiten Arretierelements zu reduzieren. Dabei wird z.B. ein das zweite Arretierelement bewegender Aktuator durch eine geeignete Steuerung derart angesteuert, dass dieser das zweite Arretierelement vor einer Kontaktierung des ersten Arretierelements abbremst. Nachteile sind dabei zum einen, dass solche Softwarelösungen geringe Bauteiltoleranzen erfordern, was erhöhte Fertigungskosten zur Folge hat. Ein langsames Absetzen lässt sich nur mit bestimmten Aktuator- bzw. Magnetkennlinien wirkungsvoll realisieren. Zum anderen sind höhere Prozessorleistungen der Steuerung und damit teurere elektronische Komponenten notwendig.

Des Weiteren sind bei Überlagerungslenkungen Lösungen bekannt, in denen das erste Arretierelement über eine Gummierung auf einer Welle der Überlagerungslenkung gelagert ist. Solche gummierten Aufhängungen sind jedoch nur bei sehr stark erhöhten Bauteiltoleranzen realisierbar. Außerdem wird nur eine Schallübertragung auf das nächste Bauteil reduziert, nicht aber eine direkte Schallausbreitung.

Der vorliegenden Erfindung liegt die Aufgabe zugrunde, eine verbesserte Arretiervorrichtung zur Arretierung einer bewegbaren Komponente bereitzustellen, insbesondere eine Arretiervorrichtung, bei der eine Geräuschentwicklung bei dem Betrieb der Arretiervorrichtung weiter vermindert wird.

Gelöst wird diese Aufgabe insbesondere durch eine Arretiervorrichtung mit den Merkmalen des Anspruchs 1.

Danach ist die Dämpfungseinrichtung am ersten Arretierelement angeordnet.

Durch die Anordnung der Dämpfungseinrichtung am ersten Arretierelement (und nicht am zweiten Arretierelement oder zusätzlich zu einer weiteren Dämpfungseinrichtung am zweiten Arretierelement) ist die Dämpfung und/oder Abbremsung besonders effektiv und ermöglicht eine Reduktion von Verriegelungsgeräuschen. Durch die Anordnung der Dämpfungseinrichtung am ersten Arretierelement können z.B. auch mechanische Schwingungen des ersten Arretierelements gedämpft werden. Bei einer Bewegung des zweiten Arretierelements in die Arretierposition können die Bewegung und eine mechanische Kraftübertragung des zweiten Arretierelements auf das erste Arretierelement durch die Dämpfungseinrichtung am ersten Arretierelement wirkungsvoll gedämpft und/oder abgebremst werden. Je nach Materialwahl für das erste und das zweite Arretierelement kann durch die Dämpfung der Bewegung des zweiten Arretierelements ein Verschleiß der Arretiervorrichtung reduziert werden. Auch ist es möglich, die Arretiervorrichtung ohne ein "langsames Absetzen" des zweiten Arretierelements zu betreiben. Somit sind keine zusätzlichen elektronischen Bauteile und/oder schnellere Prozessoren zur Steuerung notwendig. Auch ist keine aufwändige Software zur Steuerung eines langsamen Absetzens notwendig. Da eine aufwändige Steuerung eines das zweite Arretierelement antreibenden Aktuators entfällt, ist die Arretiervorrichtung unabhängig von dem Typ des Aktuators einsetzbar.

Eine Arretierung der bewegbaren Komponente erfolgt insbesondere als Lagefixierung bezüglich einer weiteren Komponente, insbesondere des Überlagerungsantriebs, bezüglich der die bewegbare Komponente in der Freigabeposition des zweiten Arretierelements in eine Relativbewegung versetzbar ist.

Bei dem ersten Arretierelement kann es sich um eine im Wesentlichen kreisscheibenförmige Arretierscheibe handeln. Insbesondere beschreibt die äußere Form des ersten Arretierelements im Wesentlichen eine Kreisscheibe und/oder einen Kreiszylinder.

Das erste Arretierelement ist bei bestimmungsgemäßer Verwendung der Arretiervorrichtung beispielsweise fest mit der zu arretierenden bewegbaren Komponente verbunden. Somit ist das erste Arretierelement gemeinsam mit der bewegbaren Komponente bewegbar, insbesondere drehbar. Beispielsweise ist das erste Arretierelement drehfest mit der bewegbaren Komponente (z.B. in Form einer Antriebsschnecke des Überlagerungsantriebes) verbunden. Durch Zusammenwirken des ersten und des zweiten Arretierelements wird eine Relativbewegung zwischen den Arretierelementen verhindert. Durch die feste Verbindung des ersten Arretierelements mit der bewegbaren Komponente wird die bewegbare Komponente arretiert.

Die Dämpfungseinrichtung umfasst (zumindest) ein Dämpfungselement.

Das Dämpfungselement kann ringförmig ausgebildet sein, insbesondere geschlossen ringförmig. Beispielsweise ist das Dämpfungselement ein O-Ring. O-Ringe sind Standardbauteile und daher besonders gut verfügbar und kostengünstig in der Herstellung. Alternativ kann das Dämpfungselement auch in Form eines offenen Rings ausgebildet sein. Auch kann sich das Dämpfungselement im Wesentlichen (zumindest teilweise) kreisförmig über das erste Arretierelement erstrecken.

Alternativ oder zusätzlich ist das Dämpfungselement als Feder ausgebildet, insbesondere als Spiralfeder, beispielsweise als geschlossene ringförmige Spiralfeder.

Das Dämpfungselement kann ein elastisches und/oder federndes Material (z.B. ein Kunststoff, etwa ein Elastomer, beispielsweise Gummi, oder ein federelastisches Metall, z.B. Federstahl) aufweisen oder aus einem solchen elastischen Material gebildet sein. Das Dämpfungselement ist z.B. ein Formteil.

Das erste Arretierelement weist eine oder mehrere, z.B. mindestens zwei Aussparungen auf. Die Aussparungen sind z.B. entlang eines äußeren Umfangs, insbesondere entlang eines umlaufenden Randbereichs, des ersten Arretierelements ausgebildet. Solche Aussparungen sind derart ausgebildet, dass das zweite Arretierelement in der Arretierposition in die Aussparung (oder in eine der Aussparungen) eingreift. Durch den Eingriff des zweiten Arretierelements in die Aussparung des ersten Arretierelements wird eine form- und/oder kraftschlüssige Verbindung (insbesondere eine überwiegend formschlüssige Verbindung) zwischen dem ersten und dem zweiten Arretierelement hergestellt.

Das Dämpfungselement der Dämpfungseinrichtung ist am ersten Arretierelement angeordnet. Das Dämpfungselement ist zumindest mit einem Abschnitt in der Aussparung (oder in den Aussparungen, insbesondere in jeder der Aussparungen) angeordnet. Greift das zweite Arretierelement in die Aussparung ein, kann dessen Bewegung auf diese Weise besonders effektiv durch das Dämpfungselement gedämpft werden, was eine Geräuschentwicklung deutlich reduziert. Das Dämpfungselement ist z.B. einteilig ausgeführt. Alternativ ist das Dämpfungselement mehrteilig ausgeführt und/oder es sind mehrere Dämpfungselemente vorgesehen.

Die Aussparung im ersten Arretierelement kann an ihrem dem zweiten Arretierelement abgewandten Ende einen Boden aufweisen. Zumindest ein Abschnitt des Dämpfungselementes kann an (insbesondere auf) dem Boden der Aussparung angeordnet sein. Das Dämpfungselement kann den Boden der Aussparung im Wesentlichen vollständig überdecken oder sich alternativ nur über einen Teil des Bodens der Aussparung erstrecken. Das zweite Arretierelement bewegt sich bei der Bewegung in die Arretierposition insbesondere auf den Boden der Aussparung hin. Durch die Anordnung (eines Abschnitts) des Dämpfungselements am Boden der Aussparung kann das zweite Arretierelement bei der Bewegung in die Arretierposition auf den Abschnitt des Dämpfungselements auftreffen (und nicht auf den Boden der Aussparung), wodurch die Bewegung des zweiten Arretierelements effektiv gedämpft werden kann.

Das erste Arretierelement weist eine von der Aussparung (oder den Aussparungen) verschiedene und von einer dem zweiten Arretierelement abgewandten Seite des ersten Arretierelements zugängliche Freimachung auf. Die Freimachung kann insbesondere an einer der Aussparung und/oder dem zweiten Arretierelement gegenüberliegenden Seite des ersten Arretierelements ausgebildet und/oder zugänglich sein. Die Freimachung kann sich von der den Aussparungen abgewandten Seite des ersten Arretierungselements in dem ersten Arretierungselement in Richtung der Aussparungen erstrecken. Das Dämpfungselement der Dämpfungseinrichtung kann ganz oder (zumindest) teilweise in der Freimachung angeordnet sein.

Die Freimachung des ersten Arretierelements kann eine Öffnung im Boden der Aussparung umfassen. Die Öffnung im Boden der Aussparung verbindet dann die Freimachung mit der Aussparung. So kann die Aussparung von der Freimachung aus zugänglich sein und z.B. eine einfache Montage des Dämpfungselements ermöglichen. Hierdurch entfallen gegebenenfalls separate Bohrungen in dem ersten Arretierelement für die Montage des Dämpfungselements. Die Öffnung im Boden der Aussparung kann kreisbogenförmig ausbildet sein. Das Dämpfungselement (oder ein Abschnitt davon) kann sich durch die Öffnung hindurch erstrecken. Das Dämpfungselement kann mindestens zum Teil das erste Arretierelement durchdringen.

Das Dämpfungselement ist durch form-, kraft- und/oder stoffschlüssige Anlage an oder in dem ersten Arretierelement gehalten. Durch die Anlage am ersten Arretierelement kann das Dämpferelement auch solche Bereiche (insbesondere des ersten Arretierelements) dämpfen, in welche bei einer Bewegung des zweiten Arretierelements zwischen der Freigabe - und der Arretierposition nicht in direkten Kontakt mit dem zweiten Arretierelement kommen. Die Montage des Dämpfungselementes kann in einfacher Weise ohne zusätzliche Form-/Spritz-Werkzeuge erfolgen. Beispielsweise erfolgt die Montage z.B. durch Kleben, allerdings ist es auch möglich, das Dämpfungselement durch Anspritzen zu montieren.

Das Dämpfungselement kann ein vorgefertigtes Bauteil sein, insbesondere ein Standardbauteil. Durch eine Anlage des vorgefertigten Dämpfungselements innerhalb des ersten Arretierelements lassen sich geringe Toleranzen und damit ein geringerer Abstand zum zweiten Arretierelement hin realisieren. Ein geringerer Abstand ermöglicht geringere Dimensionen/Abmessungen des Dämpfungselements. Dadurch können bei gleicher Bauhöhe des ersten Arretierelements höhere und damit sicherere Flanken (der Aussparungen) realisiert werden oder die Arretiervorrichtung kann insgesamt kompakter gebaut werden.

Gemäß einer weiteren Alternative ist das Dämpfungselement im Wesentlichen in Form einer Kreisscheibe ausgebildet. Das Dämpfungselement kann einen oder mehrere radial nach außen vorstehende Vorsprünge aufweisen, die jeweils in einer Aussparung des ersten Arretierelements angeordnet sind. Insbesondere kann das Dämpfungselement überwiegend in der Freimachung des ersten Arretierelements angeordnet sein und die Vorsprünge ragen jeweils durch eine Öffnung im Boden der Aussparungen in die Aussparung hinein.

Die Dämpfungseinrichtung kann ein Sicherungselement umfassen. Das Sicherungselement kann ausgebildet sein, das Dämpfungselement insbesondere formschlüssig am ersten Arretierelement zu halten. Hierdurch ist eine besonders sichere Befestigung des Dämpfungselements am ersten Arretierelement möglich.

Es kann vorgesehen sein, dass das zweite Arretierelement zwischen der Arretier- und der Freigabeposition verschiebbar angeordnet ist. Zur Fixierung der Lage der bewegbaren Komponente wird das zweite Arretierelement in die Arretierposition verschoben. Dabei kommt es mit seinem in Richtung der Arretierbewegung vordersten Ende mit dem ersten Arretierelement und/oder dem daran angeordneten Dämpfungselement in Kontakt. Das zweite Arretierelement ist insbesondere ein längliches Element, etwa ein Arretierbolzen, und beispielsweise entlang seiner Längsrichtung verschiebbar angeordnet. Die Arretierposition und die Freigabeposition sind insbesondere Endpositionen des verschieblichen zweiten Arretierelements. Beispielsweise nimmt das zweite Arretierelement in der Freigabeposition seinen größten Abstand zum ersten Arretierelement ein. Bei einer Bewegung des zweiten Arretierelements in die Arretierposition tritt das zweite Arretierelement in Kontakt mit dem Dämpfungselement.

Im Zusammenhang mit der Ausgestaltung des zweiten Arretierelements und einer Vorrichtung zum Bewegen des zweiten Arretierelements wird auf die WO 2012/120079 A1 verwiesen, auf die insofern ausdrücklich Bezug genommen wird.

Die Verwendung der erfindungsgemäßen Arretiervorrichtung ist aber nicht auf das Arretieren eines Überlagerungsantriebes beschränkt. Vielmehr kann die Arretiervorrichtung zum Arretieren einer im Prinzip beliebigen bewegbaren Komponente dienen, z.B. auch zum Arretieren einer linear bewegten Komponente.

Zusätzlich zu der Dämpfungseinrichtung am ersten Arretierelement kann auch eine weitere Dämpfungseinrichtung am zweiten Arretierelement angeordnet sein.

Gemäß einem weiteren Aspekt der vorliegenden Erfindung wird ein Überlagerungsantrieb für eine Überlagerungslenkung (insbesondere für ein Lenkrad) eines Fahrzeugs bereitgestellt, der eine Arretiervorrichtung nach einer beliebigen hierin beschriebenen Ausführung umfasst.

Die Erfindung wird nachfolgend unter Bezugnahme auf die Figuren anhand von Ausführungsbeispielen näher erläutert. Es zeigen:
- Fig. 1: eine schematische Draufsicht eines Teils eines Lenkrads mit einem Überlagerungsantrieb mit einem Ausführungsbeispiel einer erfindungsgemäßen Arretiervorrichtung;
- Fig. 2: eine vergrößerte Ansicht der Arretiervorrichtung der Fig. 1;
- Fig. 3: eine weiter vergrößerte und aufgeschnittene Ansicht der Arretiervorrichtung der Fig. 1 und 2;
- Fig. 4-7: aufgeschnittene Ansichten von verschiedenen Ausführungen einer Arretierscheibe und einer Dämpfungseinrichtung der erfindungsgemäßen Arretiervorrichtung; und
- Fig. 8-9: Draufsichten auf verschiedene Ausführungen eines Dämpfungselements einer Dämpfungseinrichtung.

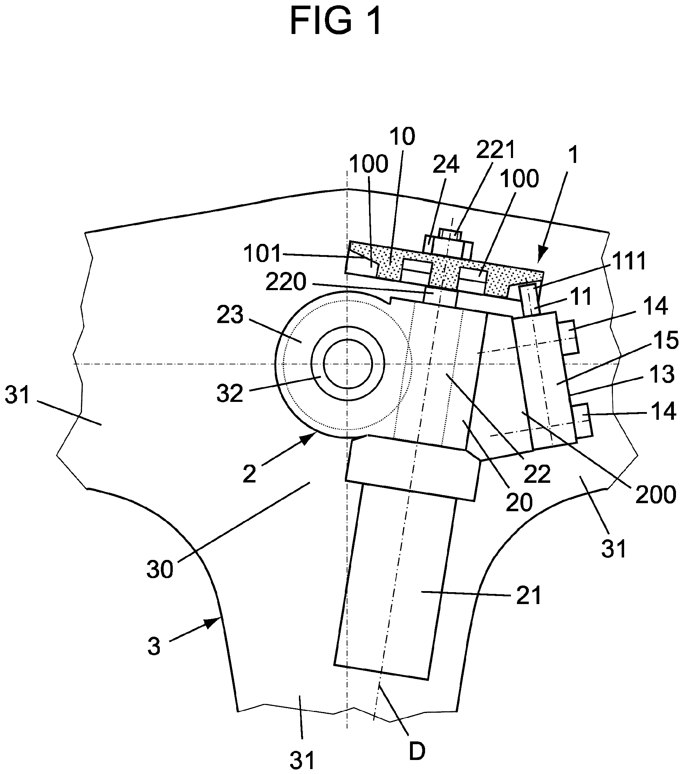

Fig.1 zeigt einen an einer zentralen Lenkradnabe 30 eines Lenkrades 3 eines Kraftfahrzeuges angeordneten Überlagerungsantrieb 2. Die Lenkradnabe 30 ist über (vorliegend drei) Speichen 31 mit einem nicht dargestellten Lenkradkranz verbunden. Über den Lenkradkranz kann ein Fahrer das Lenkrad 3 drehen und somit einer mit dem Lenkrad 3 verbundenen Lenkwelle einen Lenkwinkel aufprägen. Mittels des Überlagerungsantriebes 2 kann der Lenkwelle ein zusätzlicher Lenkwinkel aufgeprägt werden. Der zusätzliche Lenkwinkel wird dem durch Drehen des Lenkradkranzes in die Lenkwelle eingeleiteten Lenkwinkel überlagert.

Der Überlagerungsantrieb 2 ist insbesondere an einer dem Fahrer abgewandten Seite des Lenkrades 3 angeordnet und weist eine mit einem Schneckenrad 23 kämmende Antriebsschnecke 22 auf. Das Schneckenrad 23 ist über einen Fortsatz 32, der aus einem Gehäuse 20 des Überlagerungsantriebes 2 herausragt, mit der Lenkwelle des Kraftfahrzeugs gekoppelt, so dass eine Drehbewegung des Schneckenrades 23 auf die Lenkwelle übertragen wird. Das Schneckenrad 23 ist in dem Gehäuse 20 des Überlagerungsantriebes angeordnet. Der Antrieb des Schneckenrads 23 erfolgt über die Antriebsschnecke 22, welche wiederum durch einen Aktuator 21 angetrieben wird, der insbesondere in Form eines Elektromotors ausgebildet ist. Eine mögliche Ausgestaltung des Überlagerungsantriebes 2 sowie dessen Befestigung am Lenkrad 3 und mit der Lenkwelle sind z.B. in der WO 2010/115707 A1 beschrieben, auf die insofern ausdrücklich Bezug genommen wird.

Am Lenkrad 3 ist des Weiteren eine (insbesondere zu dem Überlagerungsantrieb 2 separate) Arretiervorrichtung 1 angeordnet, die dazu dient, den Überlagerungsantrieb 2 durch mechanische Einwirkung zu arretieren; beispielsweise um bei einer Fehlfunktion des Überlagerungsantriebes 2 ein Einleiten eines Lenkwinkels in die Lenkwelle durch den Überlagerungsantrieb 2 zu verhindern.

Die Arretiervorrichtung 1 weist ein erstes Arretierelement in Form einer Arretierscheibe 10 und ein zweites Arretierelement in Form eines Arretierbolzens 11 auf. Der Arretierbolzen 11 ist z.B. aus Metall hergestellt. Der Arretierbolzen 11 ist über einen (z.B. elektromagnetischen) Aktuator 15 axial aus einer Freigabeposition, in der die Arretierscheibe 10 freigegeben ist, in die in Fig. 1 dargestellte Arretierposition bewegbar. Der Aktuator 15 der Arretiervorrichtung 1 und der Arretierbolzen 11 sind im Innern eines Gehäuses 13 angeordnet, wobei der Arretierbolzen 11 mit einem Abschnitt (nämlich einem freien Ende 111) aus einer Öffnung des Gehäuses 13 hinausragt.

Das Gehäuse 13 ist an einem flanschartigen Anlageabschnitt 200 des Gehäuses 20 des Überlagerungsantriebes 2 mittels geeigneter Befestigungselemente 14 (beispielsweise in Form von Schrauben) befestigt.

Der Arretierbolzen 11 wirkt in seiner Arretierposition mit einem rotierbaren Element, nämlich der Arretierscheibe 10 (z.B. aus Metall), zusammen, wobei die Arretierscheibe 10 drehfest mit einem aus dem Gehäuse 20 des Überlagerungsantriebes 2 herausragenden freien Ende 220 der Antriebsschnecke 22 gekoppelt ist. Festgelegt wird die Arretierscheibe 10 über eine mit einem Gewindeansatz 221 am freien Ende 220 der Antriebsschnecke 22 in Eingriff stehende Verschraubung 24 (vorliegend eine Mutter). Die Arretierscheibe 10 weist zudem entlang ihres äußeren Umfanges (Randbereiches) Aussparungen 100 auf. In die Aussparungen 100 greift das aus dem Gehäuse 13 der Arretiervorrichtung 1 herausgreifende freie Ende 111 des Arretierbolzens 11 ein. Hierdurch wird die Arretierscheibe 10 vorwiegend formschlüssig verriegelt, so dass auch die mit der Arretierscheibe 10 gekoppelte Antriebsschnecke 22 blockiert ist. Die Aussparungen haben z.B. Seitenwände mit einer Tiefe von etwa 1.1 mm.

Die Aussparungen 100 der Arretierscheibe 10 erstrecken sich von einer dem Arretierbolzen 11 zugewandten Seite nur bis zu einer vorgebbaren Tiefe der Arretierscheibe 10, d.h. sie erstrecken sich nicht durch diese hindurch. Beim Bewegen des Arretierbolzens 11 in die Arretierposition (entlang einer Richtung der Arretierbewegung A, siehe Pfeil in Fig. 2) kommt es zu einem mechanischen Kontakt des vorderen Endes des Arretierbolzens 11 mit einem Boden 101 der Aussparungen 101 (Kontaktfläche) in der Arretierscheibe 10 und infolgedessen zu einer Geräuschentwicklung. Um derartige Geräusche zu unterdrücken ist die Arretierscheibe mit einer Dämpfungseinrichtung 12 versehen, die anhand der folgenden Figuren näher erläutert wird.

Fig. 2 zeigt einen vergrößerten Ausschnitt der Ausführung nach Fig. 1 mit der Arretiervorrichtung 1 in einer Teilansicht. Der Arretierbolzen 11 befindet sich in der Arretierposition, ist also über eine Aussparung 100 mit der Arretierscheibe 10 im Eingriff.

In der Arretierscheibe 10 ist ein Dämpfungselement 120A angeordnet, und zwar derart, dass der Arretierbolzen 11 bei seiner Bewegung in die Arretierposition auf dieses Dämpfungselement 120A auftrifft und abgebremst wird. Die vom Dämpfungselement 120A auf den Arretierbolzen 11 ausgeübte Kraft kann dabei auch so bemessen sein, dass ein Kontakt zwischen dem Arretierbolzen 11 und dem Boden 101 der Aussparung 100 vollständig ausbleibt.

Vorliegend ist das Dämpfungselement 120A als O-Ring (mit einem kreisrunden Querschnitt) ausgebildet. Es erstreckt sich in einer Ebene senkrecht zu einer Drehachse D des Aktuators 21 des Überlagerungsantriebs 2 (und damit der Antriebsschnecke 22 und der Arretierscheibe 10). Beispielsweise hat der O-Ring einen Außendurchmesser von etwa 33 mm und misst im Querschnitt etwa 3 mm.

In Fig. 3 zeigt eine vergrößerte, teilweise aufgeschnittene Darstellung der Ausführung der Arretiervorrichtung 1 gemäß Fig. 2 im Kontaktbereich zwischen dem aus dem Gehäuse der Arretiervorrichtung ragenden Ende 111 des Arretierbolzens 11 und der Arretierscheibe 10.

Auf der dem Arretierbolzen 11 abgewandten Seite ist die Arretierscheibe 10 mit einer rotationssymmetrisch zur Drehachse D des Aktuators 21 des Überlagerungsantriebs 2 geformten Freimachung 102 versehen und zwar bis in eine Tiefe parallel zur Drehachse D, dass sie die Aussparungen 100 auf der dem Arretierbolzen 11 zugewandten Seite durchdringt. Im Ergebnis liegen kreisbogenförmige Öffnungen 103 in dem Boden 101 der Aussparungen 100 vor. Diese verlaufen in einem Bereich des Bodens 101, auf den der Arretierbolzen 11 bei seiner Arretierbewegung auftreffen soll. Die kreisbogenförmigen Öffnungen 103 sind derart bemessen, dass das in die Freimachung 102 eingebrachte Dämpfungselement 120A nur zum Teil in die Aussparung 100 hineinragt, beispielsweise etwa 0.3 mm gegenüber dem Boden 101 der Aussparung 100. Damit der auftreffende Arretierbolzen 11 das Dämpfungselement 120A nicht wieder hinausdrückt, ist die Freimachung 102 in ihrem radialen Randbereich mit einer Kontur versehen, die das Dämpfungselement 120A teilweise einfasst. In dem in Fig. 3 gezeigten Querschnitt verläuft die Kontur der Freimachung entlang eines Abschnitts der Oberfläche des Dämpfungselements 120A.

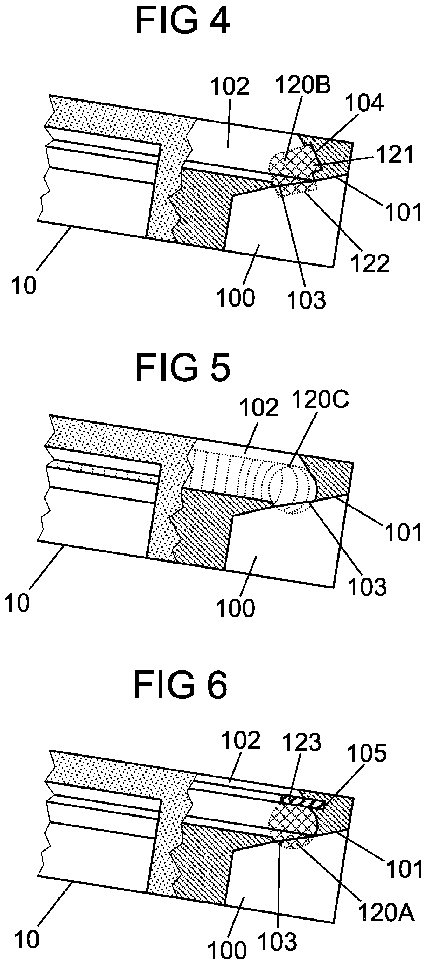

Fig. 4 zeigt ein Dämpfungselement 120B mit einem im Vergleich zu dem Dämpfungselement 120A gemäß Fig. 2 und Fig. 3 abgewandelten Querschnitt. Zur Vergrößerung des Kontaktbereiches für den Arretierbolzen 11 ist das Dämpfungselement 120B mit einer Teilfläche 122 versehen, die parallel zu einer (in Fig. 3 sichtbaren) Auftrefffläche 110 des Arretierbolzens 11 verläuft. Die Teilfläche 122 steht gegenüber dem Boden 101 der Aussparung 100 beispielsweise um etwa 0.2 mm vor.

Ferner umfasst das Dämpfungselement 120B einen Vorsprung 121, der in eine sich von der Freimachung 102 radial nach außen erstreckende umlaufende Nut 104 eingreift. Die Nut 104 kann eine formschlüssige Halterung des Dämpfungselements 120B verbessern.

In Fig. 5 ist eine weitere Abwandlung eines Dämpfungselementes 120C zu sehen, welches hier als umlaufende Spiralfeder verläuft. Das Dämpfungselement 120C ist beispielsweise aus einem federelastischen Metall hergestellt, z.B. Federstahl. Das Dämpfungselement 120C kann radial nach außen eine federelastische Kraft auf die das Dämpfungselement teilweise einfassende Kontur des Freimachung 102 der Arretierscheibe 10 ausüben und somit besonders sicher an der Arretierscheibe 10 gehalten sein.

In dem in Fig. 6 gezeigten Ausführungsbeispiel wird ein Dämpfungselement 120A (Ausführung mit kreisrundem Querschnitt lediglich beispielhaft) zusätzlich durch ein in eine Nut 105 in der Arretierscheibe 10 eingreifendes Sicherungselement 123 vor einem Herausdrücken geschützt. Die Nut 105 erstreckt sich von der Freimachung 102 in der Arretierscheibe 10 radial nach außen. Das Sicherungselement 123 kann wie dargestellt als separates Bauteil (in Form eines Sicherungsrings aus Federstahl) ausgeführt sein. Alternativ können beide Elemente kombiniert eine Baueinheit (z.B. in Form eines Wellendichtrings) darstellen. Das Sicherungselement 123 kann in Form eines Seegerrings ausgebildet sein.

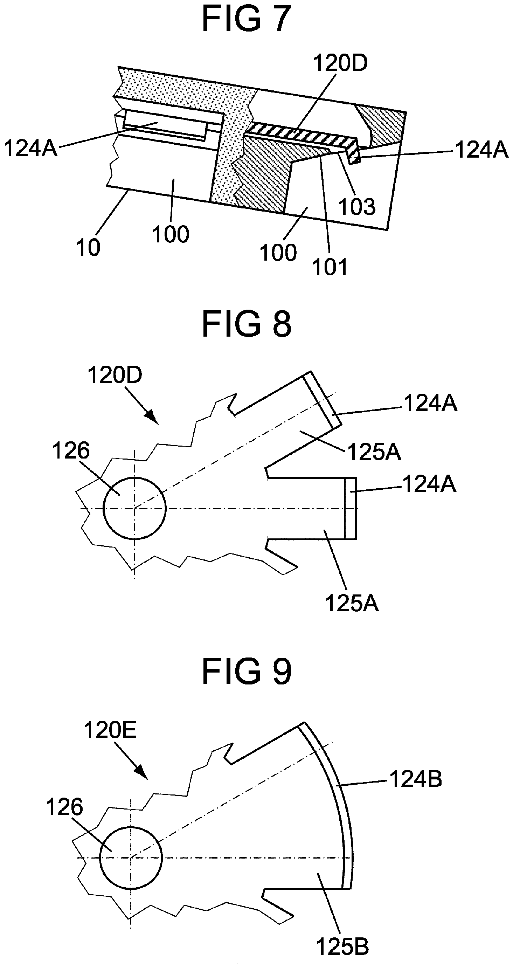

Die Fig. 7-9 zeigen weitere alternative Ausführungen von Dämpfungselementen 120D, 120E. Das Dämpfungselement 120D, 120E ist hier scheibenförmig ausgeführt und (mit einer Befestigungsöffnung 126) über den Gewindeansatz 221 und die Verschraubung 24 des Überlagerungsantriebs 2 (siehe Fig. 1 und 2) mit der Arretierscheibe 10 verbunden. Die Montage mittels der Verschraubung 24 ist besonders einfach und sicher.

An einem Ende von sich radial erstreckenden Radialbereichen 125A, 125B befinden sich abgewinkelte Vorsprünge 124A, 124B, die sich durch die kreisbogenförmigen Öffnungen 103 in die Aussparungen 100 der Arretierscheibe 10 erstrecken. An den Dämpfungselementen 120D, 120E können Positionierhilfen in Form von Vorsprüngen und/oder Öffnungen vorgesehen sein, die bei der Montage z.B. mit Positionierlöchern an der Arretierscheibe 10 in Deckung gebracht werden können.

Fig.8 zeigt eine Ausführung des Dämpfungselements 120D, bei der jeder Radialbereich 125A einer Aussparung 100 zugeordnet ist.

Abweichend davon ist bei dem Dämpfungselement 120E der Fig. 9 ein etwas breiter ausgeführter Radialbereich 125B mehreren (vorliegend zwei) Aussparungen 100 zugeordnet.

Über die Länge, Dicke und/oder Breite der Radialbereiche 125A, 125B können die Dämpfungseigenschaften (Federeigenschaften) der Vorsprünge 124A, 124B vorbestimmt werden. Die Herstellung der Dämpfungselemente 120D, 120E aus einem dünnen Federstahl ist dabei ebenso möglich, wie die Verwendung eines Elastomermaterials.

Für alle Ausführungen gilt, dass außer einer Minderung des Aufschlaggeräusches sich die Verwendung derartiger Dämpfungselemente 120A-120E positiv auf eine Ausbreitung des Körperschalls über die Arretierscheibe 10 auswirkt und so das Geräuschniveau weiter senkt.

Ferner kann bei allen Ausführungen der Arretierbolzen 11 zumindest teilweise als Hülse (hohl) ausgeführt sein, d.h. mit einer sich in Längsrichtung erstreckenden zylindrischen Ausnehmung versehen. Im Vergleich zu einer Ausführung aus Vollmaterial weist eine hülsenförmige Ausführung eine geringere Masse auf, was den beim Auftreffen des Arretierbolzens 11 auf die Arretierscheibe 10 auftretenden Impuls reduziert und so die Geräuschentwicklung mindert. Der Querschnitt (Durchmesser) der Ausnehmung im Kontaktbereich des Arretierbolzens 11 zur Arretierscheibe 10 ist geringer als im übrigen Bereich. Durch den geringeren Querschnitt wird ein in der zylindrischen Ausnehmung angeordnetes Aufschlagelement (hier in Form einer Kugel) im Arretierbolzen 11 gehalten. In Arretierrichtung betrachtet, ist in der Ausnehmung vor dem Aufschlagelement ein vorzugsweise aus einem Elastomer bestehendes Dämpfungsmittel (Elastomerelement) angeordnet, welches sich entgegen der Arretierrichtung an einem nicht dargestellten Widerlager im Arretierbolzen 11 abstützt. Das Elastomerelement ist in seinen Materialeigenschaften und Abmaßen derart ausgelegt, dass es das Aufschlagelement in Arretierrichtung mit einer definierten Kraft gegen die Querschnittsverengung der zylindrischen Ausnehmung presst. Die Querschnittsverengung ist so bemessen, dass das Aufschlagelement in der Freigabeposition des Arretierbolzens einen bestimmten Betrag über dessen vorderste Fläche (Stirnfläche) in Richtung der Arretierscheibe 10 hinausragt. Derartige Ausgestaltungen der Arretiervorrichtung sind in der WO2013/186302 beschrieben, auf die insofern ausdrücklich Bezug genommen wird.

Bei der Arretierbewegung des Arretierbolzens 11 trifft zuerst das Aufschlagelement auf die Kontaktfläche der Arretierscheibe 10 und/oder das daran angeordnete Dämpfungselement 120A-120E. Gegen den Druck des Elastomerelementes wird das Aufschlagelement in das Innere des Arretierbolzens 11 verschoben und dabei von der Querschnittsverengung gehoben. Dadurch geht der direkte Kontakt zwischen Aufschlagelement und Arretierbolzen 11 verloren und die Weiterleitung des Aufschlaggeräusches als Körperschall wird unterbrochen. Durch die entgegen der Arretierrichtung über das Aufschlagelement und das Elastomerelement in den Arretierbolzen 11 eingeleitete Kraft wird dieser abgebremst und die Stirnfläche trifft mit verminderter Geschwindigkeit auf die Kontaktfläche der Arretierscheibe 10 und/oder das daran angeordnete Dämpfungselement 120A-120E, was die Geräuschentwicklung bei der Arretierbewegung weiter reduziert. Bei entsprechender Auslegung der Dämpfungsanordnung im Arretierbolzen 11 kann ein Auftreffen der Stirnfläche auf die Kontaktfläche auch ganz vermieden werden.

Die vorstehenden Erläuterungen erfolgten insbesondere im Zusammenhang mit einer Anwendung bei einer an einem Lenkrad eines Kraftfahrzeugs angeordneten Überlagerungslenkung. Die Verwendung der Arretiervorrichtung 1 ist jedoch ausdrücklich nicht nur auf diesen Anwendungsfall beschränkt. Beispielsweise lassen sich mit der Arretiervorrichtung 1 allgemein bewegbare Komponenten, insbesondere drehbare Komponenten und ebenso auch linear bewegbare Komponenten unter verminderter Geräuschentwicklung arretieren, sodass deren Lage (relativ zu einer anderen Komponente, bezüglich der die Bewegung erfolgt), fixiert ist.

### Bezugszeichenliste

- 1: Arretiervorrichtung
- 10: Arretierscheibe (erstes Arretierelement)
- 100: Aussparung
- 101: Boden
- 102: Freimachung
- 103: Öffnung
- 104: Nut
- 105: Nut
- 11: Arretierbolzen (zweites Arretierelement)
- 110: Auftrefffläche
- 111: Ende
- 12: Dämpfungseinrichtung
- 120A-120E: Dämpfungselement
- 121: Vorsprung
- 122: Teilfläche
- 123: Sicherungselement
- 124A, 124B: Vorsprung
- 125A, 125B: Radialbereich
- 126: Befestigungsöffnung
- 13: Gehäuse
- 14: Befestigungselement
- 15: Aktuator
- 2: Überlagerungsantrieb
- 20: Gehäuse
- 200: Anlageabschnitt
- 21: Aktuator
- 22: Antriebsschnecke
- 220: freies Ende
- 221: Gewinde
- 23: Schneckenrad
- 24: Verschraubung
- 3: Lenkrad
- 30: Lenkradnabe
- 31: Speiche
- 32: Fortsatz
- A: Richtung der Arretierbewegung
- D: Drehachse

## Patentansprüche

1. Arretiervorrichtung zur Arretierung einer bewegbaren Komponente, insbesondere eines Überlagerungsantriebs einer Überlagerungslenkung, mit
- einem ersten Arretierelement (10),
- einem relativ zum ersten Arretierelement (10) zwischen einer Arretier- und einer Freigabeposition hin und her bewegbaren zweiten Arretierelement (11), das ausgebildet und eingerichtet ist, in der Arretierposition zur Arretierung der bewegbaren Komponente (22) mit dem ersten Arretierelement (10) zusammenzuwirken, wobei
- das erste Arretierelement (10) mindestens eine Aussparung (100) aufweist, in die das zweite Arretierelement (11) in der Arretierposition eingreift; und
- einer Dämpfungseinrichtung (12), die eine Bewegung des zweiten Arretierelements (11) in die Arretierposition abbremst und/oder dämpft, wobei
- die Dämpfungseinrichtung (12) am ersten Arretierelement (10) angeordnet ist und ein zumindest teilweise in der Aussparung (100) angeordnetes Dämpfungselement (120A-120E) umfasst.,
**dadurch gekennzeichnet, dass**
das Dämpfungselement (120A-120E) zumindest abschnittsweise in einer von der Aussparung (100) verschiedenen und von einer dem zweiten Arretierelement (11) abgewandten Seite des ersten Arretierelements (10) zugänglichen Freimachung (102) des ersten Arretierelements (10) angeordnet ist.

2. Arretiervorrichtung nach Anspruch 1, **dadurch gekennzeichnet, dass** es sich bei dem ersten Arretierelement (10) um eine im Wesentlichen kreisscheibenförmige Arretierscheibe handelt.

3. Arretiervorrichtung nach Anspruch 1 oder 2, **dadurch gekennzeichnet, dass** das erste Arretierelement (10) fest mit der bewegbaren Komponente (22) verbunden oder verbindbar ist.

4. Arretiervorrichtung nach einem der vorhergehenden Ansprüche, **dadurch gekennzeichnet, dass** die Dämpfungseinrichtung (12) ein ringförmig ausgebildetes Dämpfungselement (120A-120C) umfasst.

5. Arretiervorrichtung nach einem der vorhergehenden Ansprüche, **dadurch gekennzeichnet, dass** die Dämpfungseinrichtung (12) ein als Spiralfeder ausgebildetes Dämpfungselement (120C) umfasst.

6. Arretiervorrichtung nach einem der vorhergehenden Ansprüche, **dadurch gekennzeichnet, dass** die Dämpfungseinrichtung (12) ein Dämpfungselement (120A-120E) umfasst, das ein elastisches Material aufweist oder aus einem elastischen Material gebildet ist.

7. Arretiervorrichtung nach einem der vorhergehenden Ansprüche, **dadurch gekennzeichnet, dass** zumindest ein Abschnitt des Dämpfungselementes (120A-120E) an einem Boden (101) der Aussparung (100) angeordnet ist.

8. Arretiervorrichtung nach einem der Ansprüche 1 bis 3 oder 6 und 7, **dadurch gekennzeichnet, dass** das Dämpfungselement (120D, 120E) im Wesentlichen in Form einer Kreisscheibe ausgebildet ist und zumindest einen radial vorstehenden Vorsprung (124A, 124B) aufweist, der in einer Aussparung (100) des ersten Arretierelements (10) angeordnet ist.

9. Arretiervorrichtung nach einem der vorhergehenden Ansprüche, **dadurch gekennzeichnet, dass** die Dämpfungseinrichtung (12) ein Sicherungselement (123) umfasst, durch welches das Dämpfungselement (120A) formschlüssig am ersten Arretierelement (10) gehalten ist.

10. Arretiervorrichtung nach einem der vorhergehenden Ansprüche, **dadurch gekennzeichnet, dass** das zweite Arretierelement (11) in Form eines zwischen der Arretier- und der Freigabeposition längsverschieblichen Arretierbolzens ausgebildet ist.

11. Überlagerungsantrieb für eine Überlagerungslenkung eines Kraftfahrzeugs, **gekennzeichnet durch** eine Arretiervorrichtung (1) nach einem der vorhergehenden Ansprüche.

## Claims

1. Locking apparatus for locking a movable component, in particular of a superimposing drive of a superimposed steering system, having
- a first locking element (10),
- a second locking element (11) which can be moved to and fro between a locking position and a release position relative to the first locking element (10) and is configured and set up to interact with the first locking element (10) in the locking position in order to lock the movable component (22),
- the first locking element (10) having at least one cut-out (100), into which the second locking element (11) engages in the locking position; and
- a damping device (12) which brakes and/or damps a movement of the second locking element (11) into the locking position,
- the damping device (12) being arranged on the first locking element (10) and comprising a damping element (120A-120E) which is arranged at least partially in the cut-out (100),
**characterized in that**
the damping element (120A-120E) is arranged at least in sections in a clearance (102) of the first locking element (10), which clearance (102) is different from the cut-out (100) and is accessible from a side of the first locking element (10) which faces away from the second locking element (11).

2. Locking apparatus according to Claim 1, **characterized in that** the first locking element (10) is a substantially circular disc-shaped locking disc.

3. Locking apparatus according to Claim 1 or 2, **characterized in that** the first locking element (10) is connected or can be connected fixedly to the movable component (22).

4. Locking apparatus according to one of the preceding claims, **characterized in that** the damping device (12) comprises a damping element (120A-120C) of annular configuration.

5. Locking apparatus according to one of the preceding claims, **characterized in that** the damping device (12) comprises a damping element (120C) which is configured as a spiral spring.

6. Locking apparatus according to one of the preceding claims, **characterized in that** the damping device (12) comprises a damping element (120A-120E) which comprises an elastic material or is formed from an elastic material.

7. Locking apparatus according to one of the preceding claims, **characterized in that** at least one section of the damping element (120A-120E) is arranged on a bottom (101) of the cut-out (100).

8. Locking apparatus according to one of Claims 1 to 3 or 6 and 7, **characterized in that** the damping element (120D, 120E) is configured substantially in the form of a circular disc and has at least one radially protruding projection (124A, 124B) which is arranged in a cut-out (100) of the first locking element (10).

9. Locking apparatus according to one of the preceding claims, **characterized in that** the damping device (12) comprises a securing element (123), by way of which the damping element (120A) is held on the first locking element (10) in a positively locking manner.

10. Locking apparatus according to one of the preceding claims, **characterized in that** the second locking element (11) is configured in the form of a locking pin which can be displaced longitudinally between the locking position and the release position.

11. Superimposing drive for a superimposed steering system of a motor vehicle, **characterized by** a locking apparatus (1) according to one of the preceding claims.

## Revendications

1. Dispositif de blocage servant à bloquer un composant mobile, en particulier d'un entraînement à superposition d'une direction à superposition, comprenant
- un premier élément de blocage (10),
- un deuxième élément de blocage (11) pouvant être animé d'un mouvement de va-et-vient par rapport au premier élément de blocage (10) entre une position de blocage et une position de libération, lequel deuxième élément de blocage est conçu et configuré pour coopérer, dans la position de blocage, avec le premier élément de blocage (10) pour bloquer le composant mobile (22), dans lequel
- le premier élément de blocage (10) comprend au moins un évidement (100) dans lequel le deuxième élément de blocage (11) vient en prise dans la position de blocage ; et
- un dispositif d'amortissement (12) qui freine et/ou amortit un mouvement du deuxième élément de blocage (11) dans la position de blocage, dans lequel
- le dispositif d'amortissement (12) est disposé sur le premier élément de blocage (10) et comporte un élément d'amortissement (120A-120E) disposé au moins partiellement dans l'évidement (100),
**caractérisé en ce que**
l'élément d'amortissement (120A-120E) est disposé au moins sur certaines parties dans un dégagement (102) du premier élément de blocage (10) différent de l'évidement (100) et accessible depuis un côté du premier élément de blocage (10) opposé au deuxième élément de blocage (11).

2. Dispositif de blocage selon la revendication 1, **caractérisé en ce que** le premier élément de blocage (10) est un disque de blocage sensiblement en forme de disque circulaire.

3. Dispositif de blocage selon la revendication 1 ou 2, **caractérisé en ce que** le premier élément de blocage (10) est relié ou peut être relié solidement au composant mobile (22).

4. Dispositif de blocage selon l'une des revendications précédentes, **caractérisé en ce que** le dispositif d'amortissement (12) comporte un élément d'amortissement (120A-120C) réalisé sous forme annulaire.

5. Dispositif de blocage selon l'une des revendications précédentes, **caractérisé en ce que** le dispositif d'amortissement (12) comporte un élément d'amortissement (120C) réalisé sous forme de ressort en spirale.

6. Dispositif de blocage selon l'une des revendications précédentes, **caractérisé en ce que** le dispositif d'amortissement (12) comporte un élément d'amortissement (120A-120E) qui comprend un matériau élastique ou est formé à partir d'un matériau élastique.

7. Dispositif de blocage selon l'une des revendications précédentes, **caractérisé en ce qu'**au moins une partie de l'élément d'amortissement (120A-120E) est disposée sur un fond (101) de l'évidement (100).

8. Dispositif de blocage selon l'une des revendications 1 à 3 ou 6 et 7, **caractérisé en ce que** l'élément d'amortissement (120D, 120E) est réalisé sensiblement sous la forme d'un disque circulaire et comprend au moins une saillie (124A, 124B) faisant saillie radialement, laquelle est disposée dans un évidement (100) du premier élément de blocage (10).

9. Dispositif de blocage selon l'une des revendications précédentes, **caractérisé en ce que** le dispositif d'amortissement (12) comporte un élément de fixation (123) au moyen duquel l'élément d'amortissement (120A) est retenu par complémentarité de forme sur le premier élément de blocage (10).

10. Dispositif de blocage selon l'une des revendications précédentes, **caractérisé en ce que** le deuxième élément de blocage (11) est réalisé sous la forme d'un boulon de blocage mobile longitudinalement entre la position de blocage et la position de libération.

11. Entraînement à superposition pour une direction à superposition d'un véhicule automobile, **caractérisé par** un dispositif de blocage (1) selon l'une des revendications précédentes.
